# EUROPEAN PATENT SPECIFICATION

(11) **EP 4 150 309 B1**
(45) Date of publication and mention of the grant of the patent: **27.12.2023**
(21) Application number: 21733548.8
(22) Date of filing: 31.05.2021
(51) Int. Cl.: G01M 3/04, G01M 3/26, G01F 15/00, G08B 21/20, G01M 3/32

(54) **ANTI-FLOODING DEVICE OF APPARATUSES AND METHOD THEREOF**
ÜBERSCHWEMMUNGSSCHUTZVORRICHTUNG VON VORRICHTUNGEN UND VERFAHREN DAFÜR
DISPOSITIF ANTI-INONDATION D'UN APPAREIL ET PROCÉDÉ ASSOCIÉ

(30) Priority: 29.06.2020 IT 202000015610
(43) Date of publication of application: 22.03.2023
(73) Proprietor: Fregona, Emiliano, 32020 Limana (BL) (IT)
(72) Inventor: Fregona, Emiliano, 32020 Limana (BL) (IT)
(74) Representative: Biesse S.r.l.
(86) International application number: PCT/IB2021/054762
(87) International publication number: WO 2022/003445

(56) References cited:
- WO-A2-2020/120977
- US-A1- 2011 050 395

## Description

### Field of the invention

The present invention refers to an anti-flooding device of apparatuses and a method thereof for preventing the flooding of the environments in which the apparatuses are used. More particularly, it refers to an anti-flooding device and a method thereof, which can be used in the HoReCa sector, such as coffee machines, water softeners, cup washers or similar devices.

### State of the art

In the HoReCa sector, which stands for Hotel-Restaurant-Cafe/Catering, apparatuses are frequently used which, in order to operate, need to be connected to an electrical power line and to a water distributing line. Basically, these apparatuses are connected by a cable to an electrical power socket and by means of a conduit to the water distributing line, directly or possibly by means of another apparatus.

Various apparatuses fall into this category. First of all, it is possible to include professional coffee machines, manual, automatic and super-automatic coffee machines. In this case, the connection to the water distributing line is used to carry the water necessary to the coffee machine to prepare the beverages.

In addition to these, the cup washing machines also need a connection to the water distributing line to allow the washing of the dishes.

Finally, water softeners, which may be automatic, manual, cartridge-type, provided with filters and which are in general enclosed, are also to be included in this category. The water softeners have a water supply conduit which connects to the water distributing line, and an outlet conduit of softened water, i.e., depleted of calcium and magnesium salts and enriched with sodium salts.

Unlike coffee machines and cup washers, the outlet conduit of the water softeners does not carry water into the drain but, precisely because of its function, it carries softened water to other apparatuses, such as precisely the coffee machines and cup washers.

Since they are installed downstream of a water softener, coffee machines and cup washers, like other apparatuses, receive and use water poor in calcium and magnesium salts to limit the formation of limescale therein.

Therefore, in many cases the apparatuses used in the HoReCa sector are positioned downstream with respect to each other, i.e. in series: a water softener is placed upstream, which takes the water directly from the water distributing line available in the room, softens it and sends the softened water to one or more coffee machines and/or cup washers.

It is therefore clear that in the same room, or in adjacent rooms, multiple apparatuses of this type, often also arranged on the same counter, are usually positioned.

This circumstance may have some disadvantages in the event of breakage of the water conduits or of some parts of the apparatuses, such as valves and vents, and may cause flooding of the counter or, more generally, of the room in which the apparatuses are located. The damage in the event of flooding can in fact affect, in addition to the same apparatus that has suffered the malfunction, also the counter and even the entire room in which the apparatuses are positioned. To damage caused by water, for example capable of causing the bowing of a wooden floor or water infiltration into the walls, leaks can cause system short-circuit problems, precisely due to the fact that the apparatuses are powered by electrical power.

Damage due to flooding occurs mainly at night or during periods when the working activity is idle, because, as there are no staff on the workplace, the leak is not noticed promptly.

In order to overcome these drawbacks, the manufacturers of apparatuses recommend, during periods of non-use of the apparatuses, to disconnect the electric current supply cables and to close the water supply tap. Basically, the traditional apparatuses described above are not provided with an anti-flooding system and, in order to overcome possible problems that could arise when no one is present, it is necessary that at the end of the day, or before a prolonged shutdown, the operators deactivate the apparatuses completely by disconnecting the connection to the electrical power and stopping the water supply.

It is clear that this solution is not optimal: following the respective deactivation, the operations of switching on the apparatuses take a long time and make it necessary that the operators arrive at the workplace much earlier than the actual working activity start time. For example, the mere manual operations of connecting the cable to the power socket and opening the tap are not easy because they are often located in places that are not easily accessible, often inside cupboards.

The solution of programming the automatic switching on and off of the coffee machine does not solve such drawbacks because these functions do not relate to the electric current supply or water supply, but relate to the ordinary functions of these apparatuses, such as the fact of keeping the water in the tank at a certain level. Therefore, any possible water leaks would not be detected.

The same applies should it be decided to install a general-purpose solenoid valve and a timed electrical switch: in the event of faults, these will not be detected.

Solutions consisting in installing a timed general solenoid valve would instead create drawbacks in the event that the coffee machine, while the general solenoid valve is closed, required water to maintain the water level in the tank at the set level. In the event of this occurrence, the coffee machine would automatically switch off to prevent damage to the same machine and when the working activity is resumed, the operators would have to reactivate everything, resulting in a loss of time.

Alternatively, it would be possible to install an anti-flooding sensor to the coffee machine, for example at the counter which, when water is detected, sends a signal to the control unit in order to interrupt the electric power supply and water supply.

For example, WO 2020/120977 describes a solution of this type according to the preamble of claim 1.

This solution has the disadvantage of not allowing to discriminate between a water leak occurring at the coffee machine on which the sensor is mounted and the water leaks occurring at the machines adjacent to the coffee machine on the same counter: as mentioned above, multiple coffee machines are often placed on the same counter and it may happen that a coffee machine is unnecessarily switched off because it detected the presence of water leaked by an adjacent machine.

A system for monitoring a water system is further described in US 2011/050395.

In the event of water softeners, which in most cases do not provide for the possibility of remotely controlling the quality of the treatment they perform to the water, there are often breakages in the various components, such as for example at the level of fittings, the plug or the tanks, or there are malfunctions. Water softeners are generally provided with inner valves defined as anti-flooding valves which, however, do not carry out their function in the event of breakages occurring inside the water softener and in the event that they are dirty or not installed correctly.

An obvious solution would be, also in this case, to install an anti-flooding sensor which, when water is detected, sends a signal to a control unit in order to stop water supply to the water softener. Since the water softener is positioned upstream of a water circuit shared with other apparatuses, stopping the water supply to the water softener would also cause the apparatuses positioned downstream along the hydraulic circuit to be stopped, while not being affected by the damage. It is obvious that this circumstance should be avoided.

It is therefore clear that in the current state there are no known devices and respective anti-flooding methods of apparatuses capable of discriminating between water leaks of the same device and water leaks of an adjacent device, or capable of ensuring, in the event of breakage, the water supply to any apparatuses positioned downstream along the hydraulic circuit. In short, the solutions known to date do not allow an effective and automatic evaluation of the cause for the presence of water at an apparatus, and to keep the apparatuses safely connected both to the electrical power line and to the water distributing line during periods of inactivity, by ensuring that the apparatus is ready to be used upon resumption of the working activity.

### Summary of the invention

Object of the present invention is to provide an anti-flooding method of water-fed apparatuses, and more particularly an anti-flooding method of apparatuses that can be used in the HoReCa sector, such as coffee machines, cup washers and water softeners, which is easy to implement, economical and which ensures, during the period of inactivity, an effective monitoring of the cause of the presence of water without jeopardising the prompt use of the apparatus and of the apparatuses connected thereto, upon resumption of working activity.

It is a further object of the present invention to provide an anti-flooding method which allows to discriminate between a moderate water leak and a significant water leak, in order to take measures differentiated on a case-by-case basis.

The present invention, in a first aspect thereof, relates to a method according to claim 1.

In particular, claim 1 relates to an anti-flooding method of an apparatus fed with water, i.e. provided with a water supply line, comprising the steps of:
a) equipping the apparatus with at least one first sensor configured to generate an alarm signal in the presence of water, and with a control system hereinafter only referred to as *"control unit*", configured to process this signal. Basically, the at least one first sensor is configured to detect the presence of water and generate a consequent alarm signal that can be processed by the control unit. This alarm signal can be communicated to the operator as a visual, audible, SMS signal, as notification of a special application installed on a mobile phone or as notification in a remotely controlled monitoring system.
b) equipping the apparatus with means, controlled by the control unit, to stop the water supply to the apparatus. In other words, the apparatus is equipped with means, controlled by the control unit, for stopping the water supply to the apparatus at a water supply line of the same apparatus. It is therefore clear that in the context of the invention the term "apparatus" also comprises the respective water supply and delivery lines.
c) equipping the apparatus with means for measuring the value of the volume of water entering or passing through the apparatus, or equipping the apparatus with means for measuring the difference between the value of the volume of water entering the apparatus and the value of the volume of water, or a beverage, delivered by the apparatus. Basically, in step c), the method may provide, on a case-by-case basis, for equipping the apparatus with means for measuring the amount of water entering or passing through the apparatus, or means for measuring the difference between the amount of water entering the apparatus and the amount of water, or beverage, delivered. It is therefore clear that the means for measuring this difference measure the amount of water entering and the amount of water, or beverage, delivered, in such a way as to be able to calculate the difference between one value and the other.
d) by means of the at least one first sensor, detecting a water leak at at least one portion of the apparatus and generating the alarm signal. In other words, the at least one first sensor is positionable at an outer portion of the apparatus, either inside it or in a housing thereof, and is configured to detect the presence of water where it is positioned. It is clear that the at least one first sensor can be positioned at a portion of the apparatus outside or inside the case of the apparatus.

Advantageously, the method provides that
e) if
   - the value of the volume of water entering or passing through the apparatus exceeds a first limit value programmed in the control unit, or if
   - the difference between the value of the volume of water entering the apparatus and the value of the volume of water, or beverage, delivered by the apparatus is outside a range of values programmed in the control unit,
   the control unit triggers said means to stop the water supply to the apparatus.

Basically, the method provides for stopping the water supply to the apparatus through the means for stopping the water supply to the apparatus only if the following cases occur:
- the amount of water entering, or passing through, the apparatus is greater than a first limit value programmed in the control unit; i.e. if the volume of water passing through the water supply line, or passing through the apparatus, is greater than a first limit value programmed in the control unit;
- the difference between the amount of water entering the apparatus and the amount of water, or beverage, delivered by the apparatus is outside a range of values programmed in the control unit, i.e. outside a set of values programmed in the control unit.

In other words, an operator programs into the control unit an initial limit value or range of values against which to compare the measurement, or difference, detected.

It is clear that an operator will be able to program the first limit value and the range of values as required. For example, it is possible to assign the first limit value a value of 0.5 litres, or 5 litres, or to provide that the lower and upper limits of the range of values have as their absolute value, with a suitable negative or positive sign, 10% of the volume of entering water measured.

The advantages offered by this method are many.

First of all, the method allows to discriminate between a water leak at the apparatus or a water leak coming from other apparatuses or attributable to other causes.

This advantage is achieved because the method does not provide for stopping the water supply to the apparatus on the sole assumption that the presence of water is detected at the first sensor. It is clear, in fact, that, by making the water supply stop conditional to the conditions described above, the apparatus is prevented from being deactivated in the event that the first sensor detects the presence of water not due to damage of the apparatus. In fact, if the damage is at the apparatus, there would be a change in the volume of water entering, or passing through, the apparatus or a difference between the volume of entering water and the volume of water, or a beverage, delivered by the apparatus.

A second advantage of the present method is that of allowing to discriminate between moderate leaks and significant leaks.

In fact, the stopping of the water supply by the control unit is not conditional only to the detection of a deviation from the condition of absence of water leak but is conditional to the comparison of the measured value with a first limit value programmed or with a range of values programmed in the control unit.

In short, the method provides for setting a threshold within which a certain water leak is tolerable without intervening and above which, instead, a further water leak is not tolerated because otherwise damage could be caused to the environment in which the apparatus is positioned.

A third advantage of the present method is therefore that of ensuring that during the period of inactivity there is an effective monitoring of the cause resulted in the presence of water detected by the first sensor, without affecting the ready use of the apparatus and of the apparatuses connected thereto, when the working activity resumes. Basically, thanks to the present method, the operator can leave the apparatus connected to the water distributing line, without the need to disconnect it, because the method, in the event of a significant water leak, provides for stopping the water supply.

A fourth advantage of the present method is to prevent the water supply to the apparatus from being stopped and therefore switched off, when it is not necessary, i.e. when the presence of water is not attributable to damage at the apparatus and when, even if there is damage at the apparatus, the water leak is so small that it is not capable of causing damage to the environment in which the apparatus is positioned.

Preferably, step a) is carried out by equipping the apparatus with at least one first sensor positioned at a lower portion of the apparatus or in a housing thereof or in a tank of the apparatus.

Preferably, step b) is carried out by equipping the apparatus with at least one first solenoid valve which intercepts a water supply line to the apparatus. Basically, the means for stopping the water supply to the apparatus comprise at least one first solenoid valve configured to open and to allow the water supply to the apparatus, and close, in order to intercept the water entering the apparatus and stop the water supply.

Preferably step c) is carried out by:
- equipping the apparatus with at least one second sensor for measuring the volume of water entering, or passing through, the apparatus, or
- equipping the apparatus with at least one second sensor for measuring the volume of water entering the apparatus and at least one third sensor for measuring the volume of water, or beverage, delivered by the apparatus.

Basically, the means for measuring the value of the volume of water entering or passing through the apparatus and the means for measuring the difference between the volume of water entering the apparatus and the value of the volume of water or a beverage delivered by the apparatus, comprise one or more sensors configured as flowmeter sensors, or as sensors of another type, which are able to measure the amount of water passing by them.

Preferably, in the light of the above, the stopping of the water supply to the apparatus is carried out if:
- the value of the volume of water entering or passing through the apparatus exceeds, or is greater than, a first limit value programmed in the control unit, which is determined by means of a programmable pulse counter in the control unit. Basically, when the volume of water is measured, a programmable pulse counter is activated in the control unit and when the amount of water measured by the second flowmeter sensor generates a number of pulses higher than the limit provided, the water supply to the apparatus is stopped.

Otherwise, the stopping of the water supply is carried out if:
- the difference between the value of the volume of water entering the apparatus and the value of the volume of water, or beverage, delivered by the apparatus exceeds a second limit value programmed in the control unit.

This second limit value programmed in the control unit may correspond to the upper limit of the above-mentioned range of values with reference to claim 1.

Preferably, in a first embodiment of the method, the implementation of step e) is conditional to obtaining that a respective passage of water is detected at the means for measuring the value of the volume of water entering or passing through the apparatus.

Basically, the measurement of the volume of entering, or passing through, water and the comparison with a first programmed limit value are not only conditional to the detection of the presence of water from the first sensor but are also conditional to the detection of a passage of water at the level of the means set forth above. This further check allows to carry out step e) only in the event there is an effective passage of water entering or passing through the apparatus. In fact, if the presence of water is detected by the first sensor but the passage of water at said means is not detected, it means that the water present does not come from the apparatus or its pressurised circuit, and that therefore it is not necessary to continue the investigations. In this case, the method provides for sending an alarm signal and continuing to monitor the presence of a possible water passage.

Preferably, a second embodiment of the method comprises the step of:
d') equipping the apparatus with first by-pass connecting means between a supply line supplying water to the apparatus and a delivery line delivering water from the apparatus, and equipping the apparatus with first means controlled by the control unit to allow the passage of water in said first by-pass connecting means. Basically, in this step the apparatus is equipped with first by-pass connecting means, preferably comprising a first by-pass conduit, which connect directly the water supply line and the water delivery line without passing functionally through the apparatus, that is, without the water being treated by the apparatus (such as softening or freezing). First by-pass connecting means are combined with first means to allow the passage of water in the same first by-pass connecting means, preferably comprising a solenoid valve.

In the event that the method provides for step d'), in step e) described above, if the difference does not fall within the programmed range of values, or exceeds the second limit value programmed in the control unit, it also provides for carrying out step d') by controlling the opening of the passage of water in said first by-pass connecting means. Basically, in the circumstance in which the control unit detects a water leak at the apparatus, in addition to controlling the stopping of the water supply to the apparatus, the control unit controls the opening of the first means to allow the passage of water in the first by-pass connecting means. This way, both the water entering the apparatus is stopped, in order to overcome the water leak, and the water delivery is ensured to the apparatuses functionally arranged downstream of the apparatus to which the method is applied.

Preferably, a third embodiment of the method comprises the step of:
d") equipping the apparatus with second by-pass connecting means between a supply line supplying water to the apparatus and a branch of a delivery line delivering water from the apparatus, and equipping the apparatus with second means, manually controlled and/or controlled by the control unit, to allow the passage of water in said second by-pass connecting means; basically, the opening of the second means, which can be configured as a solenoid valve or as a tap, corresponds to the mixing of the water coming from the supply line with the water delivered at the branch of the delivery line, the latter being the object of treatment by the apparatus.

This step is particularly advantageous in the event that the apparatus is a water softener and in the event that it is necessary to supply to an apparatus, for example a coffee machine connected to a branch of the supply line, water which is not completely softened.

The method may also comprise a step which provides for combining with the apparatus, in a known way, a water outlet conduit from the apparatus, preferably directed to the water drain, and for equipping said conduit with a sensor configured to measure a chemical-physical parameter of the water exiting the apparatus and passing through the above-mentioned conduit. The sensor is also arranged to send the detected value to the control unit, so that it can in turn provide to a user the value detected by the sensor. Also this step is advantageous in the event that the apparatus is a water softener, because the conduit and the corresponding sensor can be combined with the filter so as to monitor when the regeneration process starts, the quality of the regeneration process and when it ends.

Preferably, the sensor for measuring water quality is a water conductivity sensor and/or a water pH sensor and/or a sensor for the amount of chlorine present in water and/or a photometer, or any sensor that allows to measure the water quality.

Preferably, an embodiment of the method provides the step of:
f) equipping the apparatus with at least one fourth sensor configured to measure a chemical-physical parameter of the water delivered by the apparatus and, if the measured parameter is higher than a pre-set value, generating an alarm signal by means of the control unit.

Basically, step f) allows to monitor the quality of the water delivered by the apparatus and, possibly, to upload the measured values to an online database that an operator can access.

In the event that step f) is carried out, it is preferable to also carry out step g), which provides for calculating, by means of the control unit, the difference between the value of the volume of water entering the apparatus and the value of the volume of water, or beverage, delivered by the apparatus in a time range and, if this difference is less than a third limit value programmed in the control unit, further provides for carrying out step f) by measuring a chemical-physical parameter of the water delivered by the apparatus.

In other words, if in a time range of multiple days (for example, four days), for example, a difference of the values set forth above is detected, which is less than a third limit value programmed in the control unit, the control unit controls to evaluate the quality of the water delivered, because this circumstance could be due to a malfunction of the apparatus. For example, in the event that the apparatus is a water softener, such smaller difference could be due to a non-optimal filter regeneration.

Preferably, the at least one fourth sensor for measuring water quality is a water conductivity sensor and/or a water pH sensor and/or a sensor for the amount of chlorine present in water and/or a photometer, or any sensor that allows to measure the water quality.

Preferably, the method provides for equipping the apparatus with means for stopping the electric power supply at an electric power cable to the same apparatus, and for controlling, at the same time as the stopping of the water supply, also the stopping of the electric power supply to the apparatus.

The present invention, in a second aspect thereof, relates to an anti-flooding device according to claim 10.

In particular, it relates to an anti-flooding device of a water-fed apparatus comprising:
- at least one first sensor configured to generate an alarm signal in the presence of water at at least one portion of the apparatus. Basically, the at least one first sensor can be positioned at at least one portion of the apparatus, either inside or outside of it, or in a housing thereof and is configured to detect the presence of water where it is positioned.
- a control unit configured to process said alarm signal;
- means, controlled by the control unit, for stopping the water supply to the apparatus. In other words, the means for stopping the water supply to the apparatus are configured to stop the water supply at a delivery line delivering water to the apparatus.

Advantageously, the device comprises means for measuring the value of the volume of water entering, or passing through, the apparatus, or means for measuring the difference between the value of the volume of water entering the apparatus and the value of the volume of water, or beverage, delivered by the apparatus. In short, these means measure the amount of entering, or passing through, water and the amount of water, or beverage delivered and, in an embodiment, measure the difference between the volume of entering water and the volume delivered.

The control unit is configured to compare the value of the volume of water entering, or passing through, the apparatus with a first limit value programmed in the control unit, or it is configured to compare the difference between the value of the volume of water entering the apparatus and the value of the volume of water, or beverage, delivered by the apparatus with a range of values programmed in the control unit.

The stopping of the water supply to the apparatus through the means, controlled by the control unit, for stopping the water supply to the apparatus is conditional to obtaining that:
- the value of the volume of water entering, or passing through, the apparatus exceeds a first limit value programmed in the control unit, or to obtaining that
- the difference between the value of the volume of water entering the apparatus and the value of the volume of water, or beverage, delivered by the apparatus is outside a range of values programmed in the control unit.

In short, the anti-flooding device described herein has characteristics and advantages corresponding to those described in the method presented above.

The anti-flooding device can be retrofitted to apparatuses already sold, i.e. it can be installed on apparatuses already mounted in the workplace.

Alternatively, the anti-flooding device can be installed during the manufacture of the apparatus and then included therein when the apparatus is sold.

Preferably, the measuring means comprise:
- at least one second sensor configured to measure the value of the volume of water entering or passing through the apparatus, or
- at least one second sensor configured to measure the value of the volume of water entering the apparatus and at least one third sensor configured to measure the value of the volume of water, or beverage, delivered by the apparatus.

In a second preferred embodiment of the anti-flooding device, it comprises:
- first by-pass connecting means configured to connect a supply line supplying water to the apparatus to a delivery line delivering water from the apparatus,
- first means, controlled by the control unit, configured to allow the passage of water in said first by-pass connecting means.

Basically, the first by-pass connecting means do not provide for the passage of water functionally through the apparatus, and the passage of water in the first by-pass connecting means is conditional to the detection of a difference between the volume of entering water and the volume of water, or beverage, delivered outside a range of values programmed in the control unit.

Preferably, the first means configured to allow the passage of water comprise at least one second solenoid valve which intercepts the first by-pass connecting means. Basically, the detection of a difference outside a range of values programmed in the control unit corresponds to the opening of said at least one second solenoid valve to allow the passage of water in the first by-pass connecting means.

In a third embodiment, the anti-flooding device comprises:
- second by-pass connecting means configured to connect a supply line supplying water to the apparatus to a branch of a delivery line delivering water from the apparatus, and
- second means, controlled manually or by the control unit, configured to allow the passage of water in said second by-pass connecting means.

The passage of water in the second by-pass connecting means corresponds to the mixing of the water coming from the water supply line with the water delivered at the branch of the delivery line.

The anti-flooding device may also comprise a conduit that can be combined with the same apparatus or that can be passed through by the water exiting the apparatus. The conduit is provided with a sensor configured to measure a chemical-physical parameter of the water exiting the apparatus and which is also configured to send the value detected by the sensor to the control unit. In turn, the control unit is arranged to provide to a user the value detected by the sensor.

In a third aspect, the present invention relates to an apparatus according to claim 15.

In particular, the present invention also relates to an apparatus comprising an anti-flooding device as described above.

The apparatus can be a manual, professional, automatic, superautomatic coffee machine, or an automatic, manual, cartridge, filter or a cup washer, or an electric pump, or an ice machine, or any water-fed apparatus, i.e. which requires a water supply line to operate.

### Brief list of the figures

Further characteristics and advantages of the invention will be better highlighted by examining the following detailed description of its preferred, but not exclusive, embodiments depicted by way of non-limiting example, with the support of the appended drawings, wherein:
- Figure 1 is a block diagram of a first embodiment of the anti-flooding method according to the present invention;
- Figure 2 is a block diagram of a second embodiment of the anti-flooding method according to the present invention,
- Figure 3 is a schematic front view of a first apparatus provided with a first embodiment of an anti-flooding device according to the present invention;
- Figure 4 is a schematic front view of a second apparatus provided with a second embodiment of an anti-flooding device according to the present invention;
- Figure 5 is a schematic view of a second apparatus provided with a third embodiment of an anti-flooding device according to the present invention.

### Detailed description of the invention

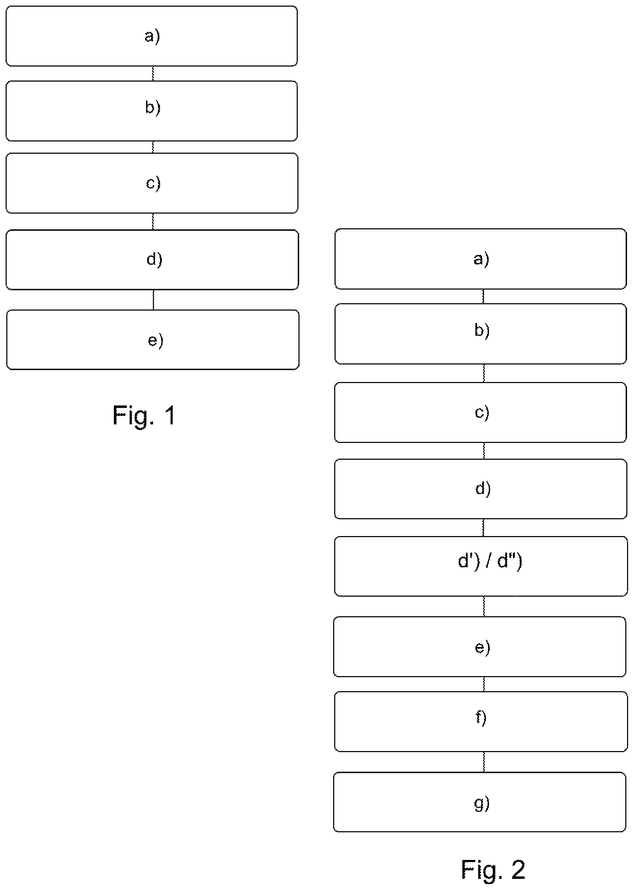

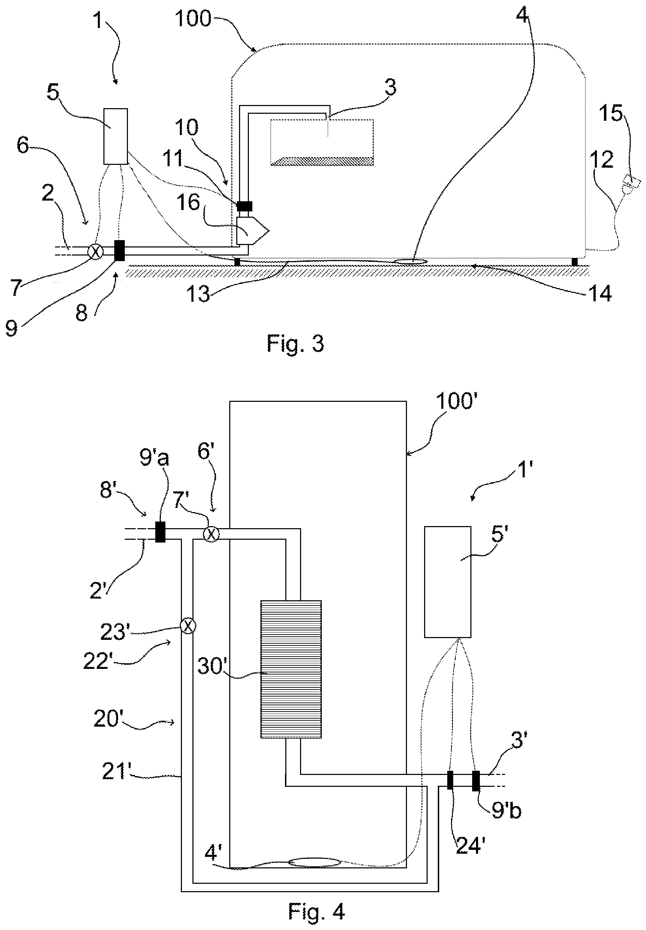

Figure 1 shows a block diagram of a first example of an anti-flooding method of a water-fed apparatus according to the present invention; in particular, the diagram exemplifies a first anti-flooding method adapted to prevent flooding due to water leaks at coffee machines 100. It should be noted in advance that this method is applicable to any type of coffee machine, whether professional, manual, automatic or superautomatic, and that the reference numbers used below are those related to figure 3 described below.

Regardless of the type of coffee machine considered, coffee machines, as is known, are fed with water, i.e. they comprise a water supply line 2 and a water delivery line 3 which, given the function of the apparatus, is a line for delivering a beverage.

The coffee machines 100 are normally powered by electric power and therefore also have an electric power cable 12 for connecting to a power socket not shown in the figure.

The method described with reference to figure 1 comprises a step a) in which the apparatus 100 is equipped with a first sensor 4 configured to generate an alarm signal in the presence of water, and with a control unit 5 configured to process the signal generated by the first sensor 4. The first sensor 4 and the control unit 5 are connected by suitable means; for example, in figure 3 the first sensor 4 and the control unit 5 are connected to each other by means of a cable 13.

In the method described herein, the first sensor 4 is positioned at the coffee machine 100, on a surface 14 on which the coffee machine 100 itself is placed, so as to be able to detect the presence of water due to a water leak coming from the coffee machine 100.

Alternatively, the first sensor 4 can be positioned at a lower inner portion of the coffee machine 100.

The method further provides, in step b), for equipping the coffee machine 100 with means 6 controlled by the control unit 5 for stopping the water supply to the coffee machine 100: such means 6 comprise, in the method described herein, a first solenoid valve 7 mounted on the water supply line 2 to the coffee machine. This first solenoid valve 7 is configured to intercept the water entering the coffee machine 100, i.e. to stop, on control of the control unit 5, the water supply to the coffee machine 100. It is therefore clear that this first solenoid valve 7 can be in the open configuration and allow the passage of water in the supply line 2, or in the closed configuration, and not allow the passage of water in the supply line 2. When the first solenoid valve 7 is in the closed configuration, the water supply to the coffee machine 100 is stopped.

The method further comprises step c), which provides for equipping the coffee machine 100 with means 8 for measuring the value of the volume of water entering the coffee machine. Basically, said means 8 comprise a flowmeter sensor 9 or a similar sensor which allows to measure the volume of water, identified as the second flowmeter sensor 9, which measures the volume of water entering the coffee machine 100. The second flowmeter sensor 9 is positioned on the water supply line 2 at the first solenoid valve 7.

In the subsequent step d), the method provides for detecting the possible presence of water by means of the first sensor 4 and generating an alarm signal in the event that water is indeed present.

Basically, in this step, the presence of water is detected where the first sensor 4 is positioned: it is clear that by positioning the first sensor 4 at the counter, it detects the presence of water accumulated thereon and that it could come from a water leak due to damage at the coffee machine 100. For this reason, the method provides for generating, in the event the presence of water is detected, an alarm signal that can be of the visual, audible type or that can be sent to a remote management system, such as an SMS message or a notification to a respective application. For this purpose, the method can provide the coffee machine 100 with a monitor on which to display the alarm signal.

In the event that the first sensor 4 does not detect the presence of water, the control unit 5 does not take any action; if instead the first sensor 4 detects the presence of water, it sends an alarm signal to the control unit 5, which in turn sends a corresponding alarm signal to the operator.

Moreover, in the event that the presence of water is detected by the sensor 4, the control unit 5 controls the second flowmeter sensor 9 to check the passage of water entering the supply line 2.

In the event that the passage of water at the second flowmeter sensor 9 is not detected, it is provided that the control unit 5 continues to send alarm signals to the operator and that it continues to detect whether there is water passage in the supply conduit 2 by means of the second sensor 9.

If the passage of water at the second flowmeter sensor 9 is not detected, it means in fact that the water detected by the first sensor 4 does not come from the coffee machine 100, i.e. it is not caused by leaks at the pressurised water circuit; for this reason, in this case, the control unit 5 is not expected to intervene by stopping the water supply to the coffee machine 100.

If, on the other hand, the control unit 5 detects that in the supply line 2, at the second flowmeter sensor 9, a passage of water is occurring, the control unit 5 controls to measure this volume of entering water by means of the same second flowmeter sensor 9.

If such volume of water exceeds a first limit value programmed in the control unit 5, the same control unit 5, upon impulse, controls the stopping of the water supply, i.e. the closure of the first solenoid valve 7.

However, in the event that the volume of entering water does not exceed this first limit value, the control unit 5 continues to monitor the passage of water and send alarm signals until an operator intervenes.

Basically, the control unit 5 closes the first solenoid valve 7 only if, once the presence of water on the counter is detected by the first sensor 4, the second flowmeter 9 measures a volume of water entering the coffee machine 100 that is higher than a first limit value programmed in the control unit 5. To carry out this control, the control unit 5 can use a programmable pulse counter.

In other words, the method described here allows to stop in a controlled way the water supply to the coffee machine 100, both because it allows to discriminate, by checking whether there is the passage of entering water, between a water leak attributable to the coffee machine 100 and a water leak coming from other sources, and because it provides for stopping the water supply only if the leak is significant, i.e. only if the volume of entering water exceeds the first limit value programmed in the control unit 5.

In fact, the method provides for two levels of control: a first level of control regarding the effective passage of water in the supply line 2 and a second level of control over the extent of volume of water measured by the second flowmeter sensor 9.

Basically, the method described here does not provide for stopping the water supply on the mere assumption that the presence of water is detected by the first sensor 4.

In short, a limit value is provided beyond which a further water leak cannot be tolerated and, depending on this limit, the water supply is stopped in order not to cause further water leaks that could cause damage to the counter or the working environment.

Thanks to the advantages offered by this method, it is possible to keep the coffee machine 100 connected to the water distribution line even during periods of working activity suspension, being sure that any possible significant water leaks that can cause damage will be prevented and ensuring that the coffee machine 100 is ready to be used when the working activity resumes.

In the light of what has been described above, it is clear that the volume of water corresponding to the first limit value programmed in the control unit 5 can be selected by the operator according to circumstances: a contained value, for example of 0.5 litres, can be selected if a water leak of no more than 0.5 litres can be tolerated, or a higher value, for example 10 litres, can be selected if it is tolerable that the coffee machine 100 can leak such an extent of volume of water before stopping the water supply. It is clear that the decision must be made according to where the coffee machine is located, the presence of other apparatuses or the extent of the damage that water leak could cause.

In addition to the aspect described above, the anti-flooding method also provides for the possibility that, at the same time as the stopping of the water supply, also the electric power supply to the apparatus is stopped. This can be achieved, for example, by providing that the control unit controls, in addition to the closure of the solenoid valve, also the closure of a special contactor, or remote-control switch, 15 combined with the electric power cable 12.

This also prevents the occurrence of short circuits due to the presence of water in the environment.

In addition to what has been described above, the anti-flooding method can provide for equipping the coffee machine 100 with means 10 for detecting the pressure of the entering water, such as for example a pressure sensor 11 identified as fifth sensor 11. In the event that the pressure value detected by the fifth sensor 11 is outside a range of pre-set pressure values, an alarm signal is sent to the control unit 5 and the water supply is stopped as described above in relation to step e).

It is possible to provide that, depending on the extent of the deviation with respect to the range of pre-set pressure values, in the event that the value of the pressure deviates a little, the method only provides for sending an alarm signal and instead provides for sending an alarm signal and stopping the water supply, in the event that the pressure value deviates more significantly.

Figure 3 shows the case in which the coffee machine has an inner electric pump 16; in this case the pressure sensor 11 is positioned inside the coffee machine 100.

In the event, not shown in the figure, that the electric pump is external, the pressure sensor 11 is positioned downstream of this electric pump, outside the coffee machine 100.

What has been described with reference to the method exemplified in the diagram in figure 1 related to a coffee machine 100 can also be applied to similar apparatuses, such as electric pumps, cup washers, ice machines and, more generally, water-fed apparatuses.

Obviously, depending on the apparatus considered, the person skilled in the art will be know how to position the various components, such as sensors and solenoid valves, in such a way as to ensure the implementation of the method described above.

For example, in the event not shown in the figure of an electric pump external to a coffee machine, the first sensor 4 can be positioned at the base of the electric pump, so as to detect any possible water leaks.

In another case not shown in the figure, the method provides for equipping both the coffee machine and the outer electric pump with a sensor 4 for detecting the presence of water.

On the other hand, figure 2 shows a block diagram of a second anti-flooding method according to the present invention, applied to a 100' water softener shown schematically in figure 4.

Water softeners are water-fed apparatuses which have the function of reducing the hardness of water, i.e. of reducing the amount of calcium and magnesium ions dissolved in the water and increasing the amount of sodium ions. It is well known that the use of softened water, i.e. depleted of calcium and magnesium ions, allows to limit the limescale build-up. For this reason, in the HoReCa field, as described with reference to the prior art, water softeners are used to ensure that the apparatuses, such as for example coffee machines, are fed with softened water, i.e. water not supplied directly from the water mains but filtered by a water softener.

Since they are water-fed apparatuses, water softeners can also have water leaks which can potentially cause flooding of the room in which the water softener is installed.

The anti-flooding method described below with reference to figure 2 allows to prevent the drawbacks resulting from a water leak at the water softener 100'.

This method has many similarities with what has been described with reference to figure 1; therefore, unless otherwise specified in certain aspects, it is possible to extend what has been described with reference to figure 1 to the anti-flooding method described in figure 2.

First of all, the method comprises the step a), which provides for equipping the water softener 100' with a first sensor 4' configured to detect the presence of water and capable of sending an alarm signal to a corresponding control unit 5'. In the case of the water softener, it is preferable to install the first sensor 4' at the base of the water softener 100', at the floor level, in order to detect the possible presence of water built up on the floor. In addition to the first sensor 4', it is possible to install in the water softener 100' a further sensor not shown in the figure and comprising a float and positioned in a respective housing inside the water softener 100'. It is clear that, as an alternative to the float, it is possible to use any other sensor or instrument configured to control the water level in a respective housing inside the water softener 100'.

Also in this case, the method provides, in step b), for equipping the water softener with means 6' for stopping the water supply, comprising a first solenoid valve 7' controlled by the control unit 5' and capable of switching to the closed configuration and stopping the water supply to the water softener 100'.

The method provides for the step c) of: equipping the water softener 100' with means 8' for detecting the difference between the value of the volume of entering water and the value of the volume of water delivered. In short, step c) provides for equipping the water softener 100' with a second flowmeter sensor 9'a, or a similar type of sensor, positioned at the water supply line 2' to the water softener 100' and with a third flowmeter sensor 9'b, or a similar type of sensor, positioned at the water supply line 3', which in most cases coincides with the supply line of the apparatus functionally positioned downstream of the water softener 100'. By arranging the first and second flowmeter sensors 9'a and 9'b in this way, it is possible to check whether, following the detection of the presence of water by the first sensor 4', water is leaking in the water softener 100'; in fact, it is clear that, in the event that the third flowmeter sensor 9'b detects a volume of water value significantly less than the volume of water value detected by the second flowmeter sensor 9'a, it means that water is leaking at the water softener 100'.

The method further has the step d) which, also in this case, provides for detecting a water leak by means of the first sensor 4' and generating an alarm signal in the event that the presence of water is detected.

In addition to this aspect, the method described herein also comprises a step d') which provides for equipping the water softener with first by-pass connecting means 20' comprising a first by-pass conduit 21', which connects directly the water supply line 2' to the water delivery line 3'. In the normal operation of the water softener, in fact, the two lines are not directly connected to each other because a filter 30' is functionally interposed between the two lines, in fact, it is necessary that the water passes through the filter 30' to be softened. The function of the by-pass conduit 21' will be explained below.

Step d') also provides for equipping the water softener with first means 22' controlled by the control unit 5' to allow the passage of water in the first by-pass conduit 21', i.e. to divert the water flow into the first by-pass conduit 21'. These first means 22' comprise, in the example described herein, a solenoid valve 23' identified as a second solenoid valve 23' which, by closing, prevents the passage of water in the first by-pass conduit 21' and, by opening, allows the passage of water in the first by-pass conduit 21'.

Returning to what described above, if the presence of water is detected by the first sensor 4', the method provides for carrying out step e), during which the difference detected in step c) is compared with a range of values programmed in the control unit 5' and, if the difference detected is outside this range of values, the water supply to the water softener 100' is stopped by closing the first solenoid valve 7'. The range of values programmed in the control unit 5' can be set according to circumstances; for example, the range can have, as its lower and upper ends, a value with a negative or positive sign equal to 10% of the value of the volume of entering water measured by the second sensor 9'a.

Therefore, in this case, if, for example, the second flowmeter sensor 9'a detects the passage of a volume equal to 5 litres of water and the third flowmeter sensor 9'b detects the passage of a volume equal to 3 litres of water, the difference is 2 litres. In this case, the range of values against which to evaluate whether or not to stop the supply is between -0.5 litres and + 0.5 litres. Since the difference of 2 litres is outside the range, the control unit 5' would control the closure of the first solenoid valve.

It is clear that the method described here allows to obtain the advantages described above in relation to the coffee machine 100. Indeed, the fact that the method provides for stopping the water supply only if the difference between the amount of entering water and the amount delivered is outside a certain range, allows to discriminate between the water leaks not attributable to the water softener and those attributable to the water softener, and between non-significant water leaks and water leaks that, due to their extent, may be able to cause damage.

It should be specified that step e) provides for comparing the difference in the volume of water with a range of values, in order to also contemplate the possibility that calculating the difference will result in a negative number. Normally, however, it would be sufficient to provide that the control unit 5' stops the water supply if the difference exceeds a single value programmed in the control unit 5', identified as the second programmed limit value, i.e. if the difference is greater than this value. For example, in order to stop the water supply, it would be sufficient to check whether the difference value is higher than 10% of the value of the volume measured of entering water.

In addition to the stopping of the water supply to the water softener 100', the step e) of the method described here preferably also provides for carrying out step d') by opening the second solenoid valve 23' combined with the first by-pass conduit 21' so as to allow the passage of water in the same first by-pass conduit 21'. Preferably, the second solenoid valve 23' is open at the same time as the closure of the first solenoid valve 7'.

In fact, it is preferable that the apparatuses functionally downstream of the water softener 100' do not remain free of the water necessary for their operation in the event that it is necessary to interrupt the water supply to the water softener 100' due to the presence of a leak therein. This is allowed precisely because the present method provides for the use of a first by-pass conduit 21' which, under the control of the control unit 5', redirects the water, normally intended to be softened by the filter 30', directly to the delivery line 3' of the water softener 100'.

It is not a problem, in fact, if the apparatuses downstream of the water softener receive unsoftened water in the short time range necessary to repair the water softener 100'.

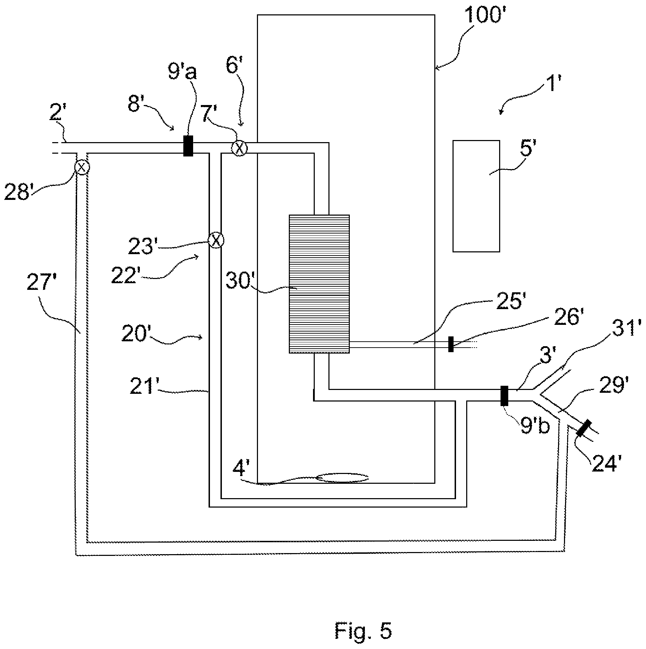

With reference to figure 5, in step d"), it is possible to equip the water softener 100' with second by-pass connecting means 27' between the supply line 2' and a branch 29' of the delivery line 3'. These second by-pass connecting means 27' are configured as a conduit 27'. The method also provides for equipping the water softener 100' with second means 28' controlled manually and/or controlled by the control unit 5', to allow the passage of water into the by-pass conduit 27', such as for example a solenoid valve 28' controlled by the control unit 5' or a tap with manual or automatic opening and closure, or any instrument or means for the partial opening of the by-pass conduit 27'.

For example, the branch 29' can be connected to a coffee machine, whereas the branch 31' can be connected to a cup washer.

Basically, the opening of the second means 28' corresponds to the mixing of the water coming from the supply line 2' with the water delivered at the branch 29' of the delivery line 3', in such a way that the coffee machine connected to the branch 29' receives water not completely softened.

The method may also comprise the step of combining with the water softener 100', and in particular with the filter 30', in a known way, a water outlet conduit 25' and equipping it with a sensor 26' configured to measure a chemical-physical parameter of the exiting water. The sensor is arranged to send the value detected to the control unit 5' and the control unit 5', in turn, is arranged to provide to a user the value detected by the sensor 26'.

It is therefore clear that the anti-flooding method applicable to the water softener 100' has the advantages described above in relation to the anti-flooding method of coffee machines and, in addition, has the advantage of quickly and automatically ensuring, under the control of the control unit 5', the operation of the apparatuses downstream of the water softener even in the event of damage to the same water softener.

In the event that the presence of water is detected by the first sensor 4' but a difference obtained as described above is not recorded outside a range of values or higher than the second limit value programmed in the control unit, the control unit 5' sends an alarm signal and continues to monitor the volume of water at the level of the flowmeter sensors 9'a, 9'b.

As an alternative to what has been described in relation to the method exemplified in figure 2, it should be specified that in the event that the water leak is detected by a sensor comprising a float, the stopping of the water supply and the opening of the first by-pass conduit 21' takes place without carrying out step c), i.e. without measuring the difference between the value of the volume of water entering the water softener and that of the delivered water.

The anti-flooding method has further optional steps which allow to obtain additional advantages to those set forth above.

Optionally, the method allows to control the pressure at which the water softener 100' operates by installing a pressure sensor in a manner similar to that described for the coffee machine 100.

Optionally, the anti-flooding method can further allow monitoring the quality of the water treatment made by the water softener 100'.

This is essentially done by equipping, with step f), the water softener with at least one fourth sensor 24' that measures a chemical-physical parameter of the water. For example, the water softener 100' can be equipped with a sensor for measuring the conductivity of the water or a sensor for measuring the pH of water or a sensor for measuring the amount of chlorine present in the water or a photometer or any other sensor that allows to measure a chemical-physical parameter of the softened water. Obviously, it is possible to equip the water softener with one or more of the sensors listed above or also with other types of sensors already known in the art, which allow to measure chemical-physical parameters of the water. Reference will be made hereinafter to a single fourth sensor 24', but it is clear that what has been described below can also be extended to the case in which the method provides for using two or more sensors.

Step f) also provides that in the event that a value is measured by the fourth sensor 24', which is greater than a pre-set value in the control unit 5', an alarm signal is emitted. It is possible to provide the possibility that the values measured by the fourth sensor 24' are uploaded to an online database which the operator can access to check the quality of the water delivered by the water softener 100'.

The fourth sensor 24', or similar sensors, can be conveniently located by the person skilled in the art at the water delivery line 3', in such a way as to be able to evaluate the water quality in the event the water comes from the filter 30', in the event that the water comes from the first by-pass conduit 21', in the event that the water comes from the conduit 27' and in the event that the water comes from both the filter 30' and the conduit 27'.

In addition to monitoring the real water softening capacity by measuring one or more chemical-physical parameters of the water, it is possible to monitor the effectiveness of the treatment carried out by the water softener 100', by using the second flowmeter sensor 9'a and the third flowmeter sensor 9'b described above.

Before going into the explanation, let us remember that the water softening is obtained by using a filter 30', for example of the ion exchange type. The use of a filter 30' implies that, within a given time range, the volume of the water entering the water softener is greater than that delivered by the water softener, this because the regeneration process of the filter provides for discharging part of the entering water to the drain. In other words, in the event of optimal operation of the water softener filter, a difference should emerge, within a time range of a few days, between the volume of entering water, which is measured by the second flowmeter sensor 9'a positioned at the supply line 2', and the volume of water delivered, which is measured by the third flowmeter sensor 9'b positioned at the water delivery line 3'. In the event that the difference is less than a third programmed limit value selected according to the type of filter 30', it means that the filter has not been regenerated.

In order to monitor this possibility, the present method also comprises step g), which provides that if the difference between the amount of water delivered and entering is less than a third programmed limit value, for example 15 litres, considering for example a time range of four days, the control unit 5' sends an alarm signal and controls to the fourth sensor 24' to measure the respective water parameter.

In general, in order to allow an adequate display of the alarm signals, the present method can provide for equipping the coffee machine 100 or the water softener 100', but in general any apparatus that requires to be fed with water, with a monitor on which the alarm signals are displayed.

Audible alarms can be deactivated by a respective button or a remote control, whereas it is preferable that visual alarms are deactivated only when the fault is resolved.

Taking into account that the apparatuses do not frequently fail, it is appropriate that the anti-flooding method provides for activating all components on a regular basis so as to keep them efficient for the time when they need to be activated. The control unit 5, 5' can identify the most suitable moment for carrying out this type of activation so as not to cause drawbacks to the normal use of the apparatus.

In the light of the fact that the above-mentioned apparatuses can be connected together in a common circuit, it should be specified that the anti-flooding method applied to each of them is independent of that applied to the others and can therefore be adapted to the specific apparatus to which the method is applied.

With reference to figures 3 and 4, two embodiments of an anti-flooding device 1, 1' are described. We state in advance that the anti-flooding devices 1, 1', according to the present invention, comprise components already known in the art, such as sensors and solenoid valves. Therefore, the anti-flooding devices 1, 1' can be sufficiently described even with reference to schematic figures. As will be clearer below, in fact, the advantages provided by the anti-flooding devices 1, 1' are given by how the different components are interfaced with each other, under the control of the respective control unit 5, 5'.

With reference to figure 3, an anti-flooding device 1 is described, which can be installed on a coffee machine 100 of any type, on an electric pump, on a cup washer or on similar apparatuses provided with a water supply line 2 and a delivery line 3 of water or a beverage.

The anti-flooding device 1 can be retrofitted to the coffee machine 100 or another apparatus mentioned above, or can be provided already included in the coffee machine 100 at the time of sale.

In the event that the anti-flooding device 1 is installed on the coffee machine 100 after sale, it is possible to fasten it, for example, under the counter on which the coffee machine 100 is positioned.

As can be seen in figure 3, first of all the anti-flooding device comprises a first sensor 4 configured to generate an alarm signal in the presence of water at at least one portion of the apparatus. As shown in figure 3, this first sensor 4 can be positioned at the base of the coffee machine 100, on the surface 14, for example.

The device also comprises a control unit 5 configured to process the alarm signal generated by the first sensor 4, and means 6 controlled by the control unit 5 for stopping the water supply to the apparatus; in short, the present device 1 comprises means 6 for stopping the water supply to the apparatus 100, which comprise a solenoid valve 7 identified as the first solenoid valve 7 that can be mounted on the water supply line 2 of the coffee machine 100.

Moreover, the device 1 is provided with means 8 for measuring the value of the volume of water entering the coffee machine 100. These means 8 comprise a second sensor 9, i.e. a second flowmeter sensor 9, and are configured to measure the volume of entering water only if the first sensor 4 detects the presence of water. In other words, the second flowmeter sensor 9 does not detect the volume of entering water at any time, but only in the presence of water at the first sensor 4. More particularly, the control unit 5 is configured to send an alarm signal in the event that the first sensor 4 detects the presence of water and is configured to control the detection of the passage of water at the second flowmeter sensor 9.

The subsequent interventions depend essentially on whether or not the passage of water is detected at the level of the second flowmeter sensor 9; in the event that the passage of water is not detected, the anti-flooding device 1 is configured to continue to send alarm signals and does not take any other action because, since no water passage is detected, it means that the presence of water is not due to leaks at the coffee machine 100, or at least at its pressurised circuit.

On the other hand, if the passage of water is detected, the control unit is configured to control the second flowmeter sensor 9 to continue measuring the volume of entering water at the solenoid valve 7.

The control unit 5 is configured to compare the value of the volume of water detected by the second flowmeter sensor 9 with a first limit value programmed in the control unit 5 and, if the volume of water detected by the second sensor 9 exceeds said first programmed limit value, the control unit 5 is configured to control the stopping of the water supply to the coffee machine 100 by closing the first solenoid valve 7. In other words, in the present device 1, the stopping of the water supply to the coffee machine 100 controlled by the control unit 5 is conditional to obtaining that the value of the volume of water entering the coffee machine 100 exceeds, i.e. is above or is greater than, a first limit value programmed in the same control unit 5.

Basically, the first limit value programmed in the control unit 5 represents the volume of water above which a water leak is not tolerated.

It is clear that the present device 1 offers the advantages described with reference to the method described above, that is to say, to allow to stop the water supply to the coffee machine 100, following the detection of water by the first sensor 4 and only if the second flowmeter sensor 9 measures a value of the volume of entering water higher than the first programmed limit value.

For example, this first limit value can be programmed at 0.5 litres and the anti-flooding device 1 can be configured to control the solenoid valve 7 only when the second flowmeter sensor 9 measures a volume of entering water higher than 0.5 litres.

In the event that a larger water leak can be tolerated, the first limit value can be programmed to a higher value, i.e. it can be for example 2.5 litres or 5 litres.

The device may also comprise pressure detection means 10 comprising a pressure detection sensor 11 identified as the fifth sensor 11, which can be installed on the supply line 2 of the coffee machine. This sensor 11 allows the water pressure to be detected and an alarm signal to be sent to the control unit 5 in the event that the pressure value exceeds a pre-set value. The control unit 5 is configured to process such alarm signal and to control the stopping of the first solenoid valve 7 in the event that the water pressure exceeds a pre-set pressure value. In Figure 3, the sensor 11 is positioned inside the coffee machine 100 because it is provided with an inner electric pump 16.

In the event, not shown, that the coffee machine 100 is provided with an outer electric pump, the sensor 11 can be positioned outside the coffee machine 100, downstream of the outer electric pump.

In the event that the apparatus 100 is provided with a power cable 12 to connect to a power socket, the control unit 5 can be configured to stop, in addition to the water supply, also the electric power supply. For this purpose, the anti-flooding device 1 also comprises a contactor, or remote-control switch, 15 into which the power cable 12 is inserted, such contactor 15 in turn can be inserted into the power socket so that when the control unit 5 controls to stop the electric power supply to the coffee machine 100, the contactor, which is interposed between the cable 12 and the power socket, switches off the electric power supply.

The anti-flooding device 1 can also be installed on electric pumps, cup washers, ice machines and any other water-fed apparatus.

With reference to figure 4, an anti-flooding device 1' is schematically shown, which can be installed on a water softener 100', i.e. on an apparatus intended for the water treatment and provided with a water supply line 2' usually connected directly to the water supply network, and with a water delivery line 3' usually connected, in turn, to the supply line of a second apparatus. The anti-flooding device 1' can also be installed on a water softener 100' in retrofit or can be already built in during the design and manufacturing steps.

As shown in figure 4, the device 1' also comprises a first sensor 4' configured to detect the presence of water, a control unit 5' and means 6' for stopping the water supply to the water softener 100', which comprise a first solenoid valve 7'.

The first sensor 4' can be installed at the base of the water softener 100', at the level of the respective support surface on the floor. In addition or as an alternative, it is possible to install a similar sensor inside the water softener 100', in a respective housing, and which may comprise a float, not shown in the figure.

Unlike what has been described above with reference to the device 1, the device 1' comprises means 8' for detecting the difference between the value of the volume of water entering the water softener 100' and the volume of water delivered by the water softener 100'; these means comprise two flowmeter sensors 9'a and 9'b: the second flowmeter sensor 9'a is intended to measure the volume of water entering the water softener 100' and can therefore be installed at the water supply line 2' and the third flowmeter sensor 9'b is intended to measure the volume of water delivered by the water softener 100', and it can therefore be installed at the water delivery line 3'.

Therefore, following the detection of the presence of water by the first sensor 4', the control unit 5' is configured to control the flowmeter sensors 9'a and 9'b to measure the corresponding volume of water and to calculate their difference; if the difference between the value of the volume of water measured by the second flowmeter sensor 9'a and the value of the volume of water measured by the third flowmeter sensor 9'b is outside a range of values programmed in the control unit 5', the control unit 5' is configured to control the stopping of the water supply to the water softener 100' by closing the first solenoid valve 7'. Basically, even in the face of a possible presence of water at the level of the first sensor 4', the control unit 5' is configured to control the stopping of the water supply to the water softener 100' only if the difference in the volume of water detected is significant, i.e. if such difference is outside a programmed range of values. This range of values may, for example, have as upper and lower limit values 10% of the value of the volume of entering water, with the appropriate positive or negative sign.

In the event that it is a sensor comprising a float for detecting the presence of water, the control unit 5' is configured to stop the water supply without detecting the difference in the volume of water at the level of the second sensor 9'a and the third sensor 9'b.

The device 1' also comprises first by-pass connecting means 20' configured to connect the water supply line 2' to the water delivery line 3'. Such first connecting means 20' comprise a first by-pass conduit 21' which, in fact, is intended to directly connect the water supply line 2' with the water delivery line 3'. In addition to said first by-pass connecting means 20', the device 1' can also be provided with first means 22' configured to allow the passage of water in the first by-pass connecting means 20'. The first means 22' comprise a solenoid valve 23' identified as a second solenoid valve 23', which is configured to open in response to a command received from the control unit 5' if the difference between the volume of entering water and that of the water delivered, as described above, is out of a range of values programmed in the control unit 5'.

Basically, if a loss occurs on the water softener, the control unit 5' controls both the closure of the first solenoid valve 7', and therefore the stopping of the water supply, and the opening of the second solenoid valve 23', and therefore the passage of water in the conduit 22' of the first by-pass connecting means 20'. This way, the water supply to the apparatuses installed functionally downstream is ensured also in the event of damage at the water softener.

The anti-flooding device 1' can also be provided with one or more sensors arranged to measure one or more chemical-physical parameters of the water delivered by the water softener. For example, the device may comprise a water conductivity sensor 24' identified as fourth sensor 24', or a similar water pH sensor or a sensor for measuring the amount of chlorine present in water or a photometer or any other sensor that allows to measure a chemical-physical parameter of softened water. The device 1' can also comprise all the sensors listed above or other sensors already known for measuring chemical-physical parameters of the water. To facilitate the description, reference will be made only to the presence of a fourth sensor 24', but it is clear that what is described with reference to the fourth sensor 24' can also be extended to one or more of the sensors listed above. The fourth sensor 24' can be installed at the supply line 3' of the water softener to intercept the water delivered by the water softener 100', which can be softened if coming from the water softener, or not softened if coming from the first by-pass conduit 21', on a case-by-case basis. The device 1' can be configured to upload the values measured by the fourth sensor 24' to an online database, in such a way that they can be examined by an operator.

The second flowmeter 9'a and the third flowmeter 9'b described above can also be used to assess the effectiveness of the treatment carried out by the water softener 100' to the water. In fact, the control unit 5' is configured to detect the difference, calculated in a time range for example of 4 days, between the volume of entering water and the volume of water delivered, and send an alarm signal if the result is less than a third limit value programmed in the control unit 5'. In this circumstance, the control unit 5' further controls to measure, by means of the fourth sensor 24', the chemical-physical parameters of the water for detecting whether the reduced functionality of the filter 30' actually has an effect on the quality of the water delivered.

The various elements that make up the anti-flooding devices 1, 1' are connected to the respective control units 5, 5' with corresponding cables 13; we specify that in figures 3 and 4, for the sake of clarity, only some of the cables are shown.

Figure 5 shows a third embodiment of an anti-flooding device 1' according to the present invention, which can be installed on a water softener 100' and is provided with a system for regenerating the filter 30', both of the automatic type and the manual type.

The anti-flooding device 1' shown in figure 5' has the characteristics described above in relation to the anti-flooding device 1' shown in figure 4.

In particular, the device 1' shown in figure 5 has a conduit 25' combined with the water outlet filter 30'. In fact, it is known to combine with the filter 30' of a water softener 100' a conduit 25' that is directed into the water drain to discharge the regeneration water of the filter 30'.

This conduit 25' is not therefore configured as a delivery line, because it is not connected to a device downstream of the water softener 100' but allows to carry out measurements of the chemical-physical parameters of the water exiting the filter 30'.

In fact, the conduit 25' is provided with a sensor identified as the sixth sensor 26', which allows to detect one or more chemical-physical parameters of the water.

In particular, the sensor 26' advantageously allows to measure the quality of the water exiting the filter 30' during the regeneration process of the filter 30'.

The sensor can be a sensor for measuring the conductivity of water or the pH of water or the amount of chlorine present in water or a photometer or any other sensor that allows to measure a chemical-physical parameter of the water.

If the conductivity of the water exiting the conduit during the regeneration process of the filter 30' is high, it means that the regeneration process occurred effectively and optimally.

The sensor sends the value detected to the control unit 5' which, preferably, is arranged to send, in turn, the value detected to the user either via SMS or on a special application, in such a way that the user can be informed of the quality of the regeneration process.

This aspect can be particularly advantageous if the regenerator process is controlled manually; in fact, thanks to the presence of the sensor 26', the user can know when the regeneration process is in progress and when it is finished (the conductivity of the water decreases), so as to avoid that water from the regeneration process is delivered or that too much time passes between the conclusion of the regeneration process and the delivery of softened water to the machines downstream of the water softener.

Preferably, the device 1' shown in figure 5 has a second by-pass conduit 27' which places the supply line 2' in fluid communication with the line with the delivery line 3'.

In particular, the second by-pass conduit 27' flows into a branch 29' of the delivery line 3' which carries the water to one or more coffee machines. Basically, the second by-pass conduit 27' is preferably not in communication with a branch of the delivery line 3' which carries the water, for example, to a cup washer or in general to a device that preferably requires softened water.

In fact, the second by-pass conduit 27' allows to mix the softened water exiting the filter 30' with unsoftened water coming directly from the supply line 2'. In fact, it is preferable to deliver water that is not completely softened to a coffee machine, to ensure a better quality coffee preparation.

Preferably, upstream of the second by-pass conduit 27', opening means 28' of the second by-pass conduit 27', which are configured as a manual tap and/or as a solenoid valve or other also remotely adjustable means, are provided. The adjustment of the passage of water in the second by-pass conduit 27' can be carried out depending on the value measured by the sensor 24'.

## Claims

1. An anti-flooding method of a water-fed apparatus (100, 100'), comprising:
a) equipping the apparatus (100, 100') with at least one first sensor (4, 4') configured to generate an alarm signal in the presence of water, and a control unit (5, 5') configured to process said signal;
b) equipping the apparatus with means (6, 6') controlled by the control unit (5, 5') to stop the water supply to the apparatus (100, 100');
c) equipping the apparatus (100) with means (8) for measuring the value of the volume of water entering or passing through the apparatus (100), or equipping the apparatus (100') with means (8') for measuring the difference between the value of the volume of water entering the apparatus (100') and the value of the volume of water, or of a beverage, delivered by the apparatus (100');
d) by means of the at least one first sensor (4, 4'), detecting a water leak at at least one portion of the apparatus (100, 100') and generating the alarm signal, **characterised in that**
e) if
- the value of the volume of water entering, or passing through, the apparatus (100) exceeds a first limit value programmed in the control unit (5), or if
- the difference between the value of the volume of water entering the apparatus (100') and the value of the volume of water, or of a beverage, delivered by the apparatus (100') is outside a range of values programmed in the control unit (5'),
the control unit (5, 5') triggers the means (6, 6') to stop the water supply to the apparatus (100, 100').

2. Anti-flooding method according to claim 1, wherein step a) is carried out by equipping the apparatus (100, 100') with at least one first sensor (4, 4') positioned at a lower portion of the apparatus (100, 100') or in a housing thereof or in a tank of the apparatus (100, 100').

3. Anti-flooding method according to claim 1 or claim 2, wherein step b) is carried out by equipping the apparatus (100, 100') with at least one first solenoid valve (7, 7'), which intercepts a supply line (2, 2') supplying water to the apparatus (100, 100').

4. Anti-flooding method according to any one of preceding claims 1-3, wherein step c) is carried out by:
- equipping the apparatus (100) with at least one second sensor (9) for measuring the volume of water entering or passing through the apparatus, or
- equipping the apparatus (100') with at least one second sensor (9'a) for measuring the volume of water entering the apparatus (100') and at least one third sensor (9'b) for measuring the volume of water, or of a beverage, delivered by the apparatus (100').

5. Anti-flooding method according to any one of preceding claims 1-4, wherein the stopping of water supply to the apparatus (100), provided in step e), is carried out:
- if the value of the volume of water entering or passing through the apparatus (100) exceeds a first limit value programmed in the control unit (5), which is determined by means of a programmable pulse counter in the control unit (5), or
- if the difference between the value of the volume of water entering the apparatus (100') and the value of the volume of water, or of a beverage, delivered by the apparatus (100') exceeds a second limit value programmed in the control unit (5').

6. Anti-flooding method according to any one of preceding claims 1-5, wherein step e) is carried out conditional to get that the means (8) for measuring the value of the volume of water entering or passing through the apparatus (100) detect a passage of water at the same means (8).

7. Anti-flooding method according to any one of preceding claims 1-6, comprising:
d') equipping the apparatus (100') with first by-pass connecting means (20') between a supply line (2') supplying water to the apparatus (100') and a delivery line (3') delivering water from the apparatus (100'), and equipping the apparatus (100') with first means (22'), which are controlled by the control unit (5'), to allow the passage of water in said first by-pass connecting means (20'),
wherein in step e), if the difference is outside the range of values programmed in the control unit (5'), or if it exceeds the second limit value programmed in the control unit (5'), carrying out also step d') by controlling the opening of the passage of water in said first by-pass connecting means (20').

8. Anti-flooding method according to any one of preceding claims 1-7, comprising:
d") equipping the apparatus (100') with second by-pass connecting means (27') between a supply line (2') supplying water to the apparatus (100') and a branch (29') of a delivery line (3') of the apparatus (100') delivering water, and equipping the apparatus (100') with second means (28') manually controlled and/or controlled by the control unit (5'), to allow the passage of water in said second by-pass connecting means (27'),
wherein the opening of the second means (28') corresponds to the mixing of the water coming from the supply line (2') with the water delivered at the branch (29') of the delivery line (3').

9. Anti-flooding method according to any one of preceding claims 1-8, comprising:
- equipping the apparatus (100) with means for stopping the electric power supply to the apparatus (100) at an electric power cable (12), and wherein
in step e), the control unit (5) controls, in addition to the stopping of the water supply, also the stopping of the electric power supply.

10. Anti-flooding device (1, 1') of a water-fed apparatus (100, 100') comprising:
- at least one first sensor (4, 4') configured to generate an alarm signal in the presence of water at at least one portion of the apparatus (100, 100');
- a control unit (5, 5') configured to process said alarm signal;
- means (6, 6'), controlled by the control unit (5, 5'), for stopping the water supply to the apparatus (100, 100');
- means (8) for measuring the value of the volume of water entering, or passing through, the apparatus (100), or means (8') for measuring the difference between the value of the volume of water entering the apparatus (100') and the value of the volume of water, or of a beverage, delivered by the apparatus (100');
**characterised in that** the control unit (5, 5') is configured to compare the value of the volume of water entering, or passing through, the apparatus (100) with a first limit value programmed in the control unit (5), or it is configured to compare the difference between the value of the volume of water entering the apparatus (100') and the value of the volume of water, or of a beverage, delivered by the apparatus (100') with a range of values programmed in the control unit (5'),
and **in that** the stopping of the water supply to the apparatus (100, 100') is conditional to get that:
- the value of the volume of water entering, or passing through, the apparatus (100) exceeds a first limit value programmed in the control unit (5), or that
- the difference between the value of the volume of water entering the apparatus (100') and the value of the volume of water, or of a beverage, delivered by the apparatus (100') is outside a range of values programmed in the control unit (5').

11. Device (1, 1') according to claim 10, wherein the detecting means (8, 8') comprise:
- at least one second sensor (9) configured to measure the value of the volume of water entering or passing through the apparatus (100), or
- at least one second sensor (9'a) configured to measure the value of the volume of water entering the apparatus (100') and at least one third sensor (9'b) configured to measure the value of the volume of water, or of a beverage, delivered by the apparatus (100').

12. Device (1') according to claim 10 or claim 11, comprising:
- first by-pass connecting means (20') configured to connect a supply line (2') supplying water to the apparatus (100') to a delivery line (3') delivering water from the apparatus (100'),
- first means (22'), controlled by the control unit (5'), configured to allow the passage of water in said first by-pass connecting means (20'),
wherein the passage of water in the first by-pass connecting means (20') is conditional to detect a difference between the value of the volume of water entering the apparatus (100') and the value of the volume of water, or of a beverage, delivered by the apparatus (100') outside a range of values programmed in the control unit (5').

13. Device (1') according to claim 12, wherein the first means (22') configured to allow the passage of water comprise at least one second solenoid valve (23'), which intercepts the by-pass connecting means (20').

14. Device (1') according to any one of preceding claims 10-13, comprising:
- second by-pass connecting means (27') configured to connect a supply line (2') supplying water to the apparatus (100') to a branch (29') of a delivery line (3') delivering water from the apparatus (100'),
- second means (28'), controlled by the control unit (5'), configured to allow the passage of water in said second by-pass connecting means (27'),
wherein the passage of water in the second by-pass connecting means (27') corresponds to the mixing of the water coming from the water supply line (2') with the water delivered at the branch (29') of the delivery line (3').

15. Apparatus (100, 100') **characterised by** comprising an anti-flooding device (1, 1') according to any one of preceding claims 10-14.

## Patentansprüche

1. Überschwemmungsschutzverfahren eines wassergespeisten Apparats (100, 100'), umfassend:
a) Ausrüsten des Apparats (100, 100') mit mindestens einem ersten Sensor (4, 4'), der zum Erzeugen eines Alarmsignals bei Anwesenheit von Wasser eingerichtet ist, und einer Steuereinheit (5, 5'), die zum Verarbeiten des besagten Signals eingerichtet ist;
b) Ausrüsten des Apparats mit von der Steuereinheit (5, 5') gesteuerten Mitteln (6, 6'), um die Wasserzufuhr zum Apparat (100, 100') zu stoppen;
c) Ausrüsten des Apparats (100) mit Mitteln (8) zum Messen des Werts des in den Apparat (100) eintretenden oder durch diesen hindurch fließenden Wasservolumens, oder Ausrüsten des Apparats (100') mit Mitteln (8') zum Messen der Differenz zwischen dem Wert des in den Apparat (100') eintretenden Wasservolumens und dem Wert des Wasservolumens oder eines Getränks, das vom Apparat (100') abgegeben wird;
d) Erfassen, mittels des mindestens einen ersten Sensors (4, 4'), eines Wasserlecks an mindestens einem Abschnitt des Apparats (100, 100') und Erzeugen des Alarmsignals, **dadurch gekennzeichnet, dass**,
e) wenn
- der Wert des in den Apparat (100) eintretenden oder durch diesen hindurch fließenden Wasservolumens einen ersten, in der Steuereinheit (5) programmierten Grenzwert überschreitet, oder wenn
- die Differenz zwischen dem Wert des in den Apparat (100') eintretenden Wasservolumens und dem Wert des vom Apparat (100') abgegebenen Wasser- oder Getränkevolumens außerhalb eines in der Steuereinheit (5') programmierten Wertebereichs liegt,
die Steuereinheit (5, 5') die Mittel (6, 6') zur Unterbrechung der Wasserzufuhr zum Apparat (100, 100') auslöst.

2. Überschwemmungsschutzverfahren nach Anspruch 1, wobei Schritt a) durch Ausrüsten des Apparats (100, 100') mit mindestens einem ersten Sensor (4, 4') durchgeführt wird, der im Bereich eines unteren Abschnitts des Apparats (100, 100') oder in einem Gehäuse davon oder in einem Tank des Apparats (100, 100') angeordnet ist.

3. Überschwemmungsschutzverfahren nach Anspruch 1 oder 2, wobei Schritt b) durch Ausrüsten des Apparats (100, 100') mit mindestens einem ersten Magnetventil (7, 7') durchgeführt wird, das eine Wasser zum Apparat (100, 100') zuführende Zuleitung (2, 2) absperrt.

4. Überschwemmungsschutzverfahren nach einem der vorhergehenden Ansprüche 1 bis 3, wobei Schritt c) durchgeführt wird durch:
- Ausrüsten des Apparats (100) mit mindestens einem zweiten Sensor (9) zum Messen des in den Apparat eintretenden oder durch diesen hindurch fließenden Wasservolumens, oder
- Ausrüsten des Apparats (100') mit mindestens einem zweiten Sensor (9'a) zum Messen des in den Apparat (100') eintretenden Wasservolumens und mindestens einem dritten Sensor (9'b) zum Messen des vom Apparat (100') abgegebenen Wasser- oder Getränkevolumens.

5. Überschwemmungsschutzverfahren nach einem der vorhergehenden Ansprüche 1 bis 4, wobei die im Schritt e) vorgesehene Unterbrechung der Wasserzufuhr zum Apparat (100) durchgeführt wird:
- wenn der Wert des in den Apparat (100) eintretenden oder durch diesen hindurch fließenden Wasservolumens einen ersten, in der Steuereinheit (5) programmierten Grenzwert überschreitet, der mittels eines programmierbaren Impulszählers im Steuergerät (5) ermittelt wird, oder
- wenn die Differenz zwischen dem Wert des in den Apparat (100') eintretenden Wasservolumens und dem Wert des vom Apparat (100') abgegebenen Wasser- oder Getränkevolumens einen zweiten, in der Steuereinheit (5) programmierten Grenzwert überschreitet.

6. Überschwemmungsschutzverfahren nach einem der vorhergehenden Ansprüche 1 bis 5, wobei Schritt e) unter der Bedingung ausgeführt wird, dass die Mittel (8) zum Messen des Werts des in den Apparat (100) eintretenden oder durch diesen hindurch fließenden Wasservolumens, einen Wasserdurchgang im Bereich derselben Mittel (8) erfassen.

7. Überschwemmungsschutzverfahren nach einem der vorangehenden Ansprüche 1 bis 6, umfassend:
d') Ausrüsten des Apparats (100') mit ersten Bypass-Verbindungsmitteln (20') zwischen einer Zuleitung (2'), die dem Apparat (100') Wasser zuführt, und einer Abgabeleitung (3'), die Wasser vom Apparat (100') abgibt, und Ausrüsten des Apparats (100') mit ersten Mitteln (22'), die von der Steuereinheit (5') gesteuert werden, um den Wasserdurchgang in die besagten ersten Bypass-Verbindungsmittel (20) zu gestatten,
wobei in Schritt e), wenn die Differenz außerhalb des in der Steuereinheit (5') programmierten Wertebereichs liegt oder den in der Steuereinheit (5') programmierten zweiten Grenzwert überschreitet, zusätzlich Schritt d') durch Steuern der Öffnung des Wasserdurchgangs in die ersten Bypass-Verbindungsmittel (20') ausgeführt wird.

8. Überschwemmungsschutzverfahren nach einem der vorangehenden Ansprüche 1 bis 7, umfassend:
d") Ausrüsten des Apparats (100') mit zweiten Bypass-Verbindungsmitteln (27') zwischen einer Zuleitung (2'), die dem Apparat (100') Wasser zuführt, und einer Abzweigung (29') einer wasserabgebende Abgabeleitung (3') des Apparats (100'), und Ausrüsten des Apparats (100') mit zweiten Mitteln (28'), die manuell oder von der Steuereinheit (5') gesteuert werden, um den Wasserdurchgang in die zweiten Bypass-Verbindungsmittel (27) zu gestatten,
wobei das Öffnen der zweiten Mittel (28') der Vermischung des aus der Zuleitung (2') kommenden Wassers mit dem an der Abzweigung (29') der Abgabeleitung (3') abgegebenen Wasser entspricht.

9. Überschwemmungsschutzverfahren nach einem der vorangehenden Ansprüche 1 bis 8, umfassend:
- Ausrüsten des Apparats (100) mit Mitteln zum Unterbrechen der elektrischen Stromversorgung zum Apparat (100) an einem Stromversorgungskabel (12), und wobei
in Schritt e), die Steuereinheit (5) zusätzlich zur Unterbrechung der Wasserversorgung auch die Unterbrechung der elektrischen Stromversorgung steuert.

10. Überschwemmungsschutzvorrichtung (1, 1') eines wassergespeisten Apparats (100, 100'), umfassend:
- mindestens einen ersten Sensor (4, 4'), der zum Erzeugen eines Alarmsignals bei Anwesenheit von Wasser in zumindest einem Abschnitt des Apparats (100, 100') eingerichtet ist;
- eine Steuereinheit (5, 5'), die zur Verarbeitung des Alarmsignals eingerichtet ist;
- von der Steuereinheit (5, 5') gesteuerte Mittel (6, 6') zur Unterbrechung der Wasserzufuhr zum Apparat (100, 100');
- Mittel (8) zum Messen des Werts des in den Apparat (100) eintretenden oder durch diesen hindurch fließenden Wasservolumens, oder Mittel (8') zum Messen der Differenz zwischen dem Wert des in den Apparat (100') eintretenden Wasservolumens und dem Wert des vom Apparat (100') abgegebenen Wasser- oder Getränkevolumens;
**dadurch gekennzeichnet, dass** die Steuereinheit (5, 5') zum Vergleichen des Werts des in den Apparat (100) eintretenden oder durch diesen hindurch fließenden Wasservolumens mit einem in der Steuereinheit (5) programmierten ersten Grenzwert eingerichtet ist, oder zum Vergleichen der Differenz zwischen dem Wert des in den Apparat (100') eintretenden Wasservolumens und dem Wert des vom Apparat (100') abgegebenen Wasser- oder Getränkevolumens mit einem in der Steuereinheit (5') programmierten Wertebereich,
und, dass die Unterbrechung der Wasserzufuhr zum Apparat (100, 100') von folgender Zielbedingung abhängig ist:
- der Wert des in den Apparat (100) eintretenden oder durch diesen hindurch fließenden Wasservolumens einen ersten, in der Steuereinheit (5) programmierten Grenzwert überschreitet, oder
- die Differenz zwischen dem Wert des in den Apparat (100') eintretenden Wasservolumens und dem Wert des vom Apparat (100') abgegebenen Wasser- oder Getränkevolumens außerhalb eines in der Steuereinheit (5') programmierten Wertebereichs liegt.

11. Vorrichtung (1, 1') nach Anspruch 10, wobei die Erfassungsmittel (8, 8') umfassen:
- mindestens einen zweiten Sensor (9), der zum Messen des Werts des in den Apparat (100) eintretenden oder durch diesen hindurch fließenden Wasservolumens, oder
- mindestens einen zweiten Sensor (9'a), der zum Messen des in den Apparat (100') eintretenden Wasservolumens und mindestens einem dritten Sensor (9'b) zum Messen des vom Apparat (100') abgegebenen Wasser- oder Getränkevolumens eingerichtet ist.

12. Vorrichtung (1') nach Anspruch 10 oder 11, umfassend:
- erste Bypass-Verbindungsmittel (20'), die zur Verbindung einer Zuleitung (2'), die dem Apparat (100') Wasser zuführt, mit einer Abgabeleitung (3'), die Wasser vom Apparat (100') abgibt, eingerichtet ist,
- erste Mittel (22'), die von der Steuereinheit (5') gesteuert werden und dazu eingerichtet sind, den Wasserdurchgang in die besagten ersten Bypass-Verbindungsmittel (20') zu gestatten,
wobei der Wasserdurchgang in die ersten Bypass-Verbindungsmittel (20') von der Erfassung einer Differenz zwischen dem Wert des in den Apparat (100') eintretenden Wasservolumens und dem Wert des vom Apparat (100') abgegebenen Wasser- oder Getränkevolumens außerhalb eines in der Steuereinheit (5') programmierten Wertebereichs abhängig ist.

13. Vorrichtung (1') nach Anspruch 12, wobei die ersten Mittel (22'), die dazu eingerichtet sind, den Wasserdurchgang zu gestatten, mindestens ein zweites Magnetventil (23') umfassen, das die Bypass-Verbindungsmittel (20') absperrt.

14. Vorrichtung (1') nach einem der vorangehenden Ansprüche 10 bis 13, umfassend:
- zweite Bypass-Verbindungsmittel (27'), die zur Verbindung einer Zuleitung (2'), die dem Apparat (100') Wasser zuführt, mit einer Abzweigung (29') einer Abgabeleitung (3'), die Wasser vom Apparat (100') abgibt, eingerichtet ist,
- zweite Mittel (28'), die von der Steuereinheit (5') gesteuert werden und dazu eingerichtet sind, den Wasserdurchgang in die besagten zweiten Bypass-Verbindungsmittel (27') zu gestatten,
wobei der Wasserdurchgang in die zweiten Bypass-Verbindungsmittel (27') der Vermischung des aus der Wasserzuleitung (2') kommenden Wassers mit dem an der Abzweigung (29') der Abgabeleitung (3') abgegebenen Wasser entspricht.

15. Apparat (100, 100'), **dadurch gekennzeichnet, dass** er eine Überschwemmungsschutzvorrichtung (1, 1') nach einem der vorhergehenden Ansprüche 10-14 umfasst.

## Revendications

1. Une méthode anti-inondation d'un appareil alimenté en eau (100, 100'), comprenant:
a) équiper l'appareil (100, 100') d'au moins un premier capteur (4, 4') configuré pour générer un signal d'alarme en présence d'eau, et d'une unité de commande (5, 5') configurée pour traiter ledit signal;
b) équiper l'appareil de moyens (6, 6') contrôlés par l'unité de commande (5, 5') pour arrêter l'alimentation en eau de l'appareil (100, 100');
c) équiper l'appareil (100) de moyens (8) pour mesurer la valeur du volume d'eau entrant dans ou traversant l'appareil (100), ou équiper l'appareil (100') de moyens (8') pour mesurer la différence entre la valeur du volume d'eau entrant dans l'appareil (100') et la valeur du volume d'eau, ou d'une boisson, délivrée par l'appareil (100');
d) détecter, au moyen du au moins un premier capteur (4, 4'), une fuite d'eau en correspondance d'au moins une portion de l'appareil (100, 100') et générer un signal d'alarme, **caractérisée en ce que**
e) si
- la valeur du volume d'eau entrant dans ou traversant l'appareil (100) dépasse une première valeur limite programmée dans l'unité de commande (5), ou si
- la différence entre la valeur du volume d'eau entrant dans l'appareil (100') et la valeur du volume d'eau, ou d'une boisson, délivrée par l'appareil (100') est en dehors d'une plage de valeurs programmées dans l'unité de commande (5'),
l'unité de commande (5, 5') déclenche les moyens (6, 6') pour arrêter l'alimentation en eau de l'appareil (100, 100').

2. Méthode anti-inondation selon la revendication 1, dans laquelle l'étape a) est effectuée en équipant l'appareil (100, 100') d'au moins un premier capteur (4, 4') positionné en correspondance d'une portion inférieure de l'appareil (100, 100') ou dans un logement du même ou dans un réservoir de l'appareil (100, 100').

3. Méthode anti-inondation selon la revendication 1 ou la revendication 2, dans laquelle l'étape b) est effectuée en équipant l'appareil (100, 100') d'au moins une première électrovanne (7, 7') qui intercepte une ligne d'alimentation (2, 2') alimentant en eau l'appareil (100, 100').

4. Méthode anti-inondation selon l'une quelconque des revendications précédentes 1-3, dans laquelle l'étape c) est effectuée en:
- équipant l'appareil (100) d'au moins un second capteur (9) pour mesurer le volume d'eau entrant dans ou traversant l'appareil, ou
- équipant l'appareil (100') d'au moins un second capteur (9'a) pour mesurer le volume d'eau entrant dans l'appareil (100') et d'au moins un troisième capteur (9'b) pour mesurer le volume d'eau, ou d'une boisson, délivrée par l'appareil (100').

5. Méthode anti-inondation selon l'une quelconque des revendications précédentes 1-4, dans laquelle l'arrêt de l'alimentation en eau de l'appareil (100), prévu dans l'étape e), est effectué:
- si la valeur du volume d'eau entrant dans ou traversant l'appareil (100) dépasse une première valeur limite programmée dans l'unité de commande (5), qui est déterminée au moyen d'un compteur d'impulsions programmable dans l'unité de commande (5), ou
- si la différence entre la valeur du volume d'eau entrant dans l'appareil (100') et la valeur du volume d'eau, ou d'une boisson, délivrée par l'appareil (100') dépasse une seconde valeur limite programmée dans l'unité de commande (5').

6. Méthode anti-inondation selon l'une quelconque des revendications 1-5, dans laquelle l'étape e) est effectuée sous réserve que les moyens (8) pour mesurer le volume d'eau entrant dans ou traversant l'appareil (100) détectent un passage d'eau en correspondance des mêmes moyens (8).

7. Méthode anti-inondation selon l'une quelconque des revendications précédentes 1-6, comprenant:
d) équiper l'appareil (100') de premiers moyens de connexion de dérivation (20') entre une ligne d'alimentation (2') alimentant en eau l'appareil (100') et une ligne de distribution (3') délivrant de l'eau de l'appareil (100'), et équiper l'appareil (100') de premiers moyens (22') contrôlés par une unité de commande (5') pour permettre le passage de l'eau dans lesdits premiers moyens de connexion de dérivation (20'),
dans laquelle, dans l'étape e), si la différence est en dehors de la plage des valeurs programmées dans l'unité de commande (5'), ou si elle dépasse la seconde valeur limite programmée dans l'unité de commande (5'), effectuer également l'étape d') en contrôlant l'ouverture du passage d'eau dans lesdits premiers moyens de connexion de dérivation (20').

8. Méthode anti-inondation selon l'une quelconque des revendications précédentes 1-7, comprenant:
d') équiper l'appareil (100') de seconds moyens de connexion de dérivation (27') entre une ligne d'alimentation (2') alimentant en eau l'appareil (100') et une branche (29') d'une ligne de distribution (3') de l'appareil (100') délivrant de l'eau, et équiper l'appareil (100') de seconds moyens (28') contrôlés manuellement et/ou contrôlés par l'unité de commande (5') pour permettre le passage de l'eau dans lesdits seconds moyens de connexion de dérivation (27'),
dans laquelle l'ouverture des seconds moyens (28') correspond au mélange de l'eau provenant de la ligne d'alimentation (2') avec l'eau délivrée en correspondance de la branche (29') de la ligne de distribution (3').

9. Méthode anti-inondation selon l'une quelconque des revendications précédentes 1-8, comprenant:
- équiper l'appareil (100) de moyens pour arrêter l'alimentation électrique de l'appareil (100) en correspondance d'un câble d'alimentation électrique (12), et dans laquelle
dans l'étape e), l'unité de commande (5) contrôle également, outre l'arrêt de l'alimentation en eau, l'arrêt de l'alimentation électrique.

10. Dispositif anti-inondation (1, 1') d'un appareil alimenté en eau (100, 100') comprenant:
- au moins un premier capteur (4, 4') configuré pour générer un signal d'alarme lors de la présence d'eau en correspondance d'au moins une portion de l'appareil (100, 100');
- une unité de commande (5, 5') configurée pour traiter ledit signal d'alarme;
- des moyens (6, 6') commandés par l'unité de commande (5, 5'), pour arrêter l'alimentation en eau de l'appareil (100, 100');
- des moyens (8) pour mesurer la valeur du volume d'eau entrant dans ou traversant l'appareil (100), ou des moyens (8') pour mesurer la différence entre la valeur du volume d'eau entrant dans l'appareil (100') et la valeur du volume d'eau, ou d'une boisson, délivrée par l'appareil (100');
**caractérisé en ce que** l'unité de commande (5, 5') est configurée pour comparer la valeur du volume d'eau entrant dans ou traversant l'appareil (100) à une première valeur limite programmée dans l'unité de commande (5), ou est configurée pour comparer la différence entre la valeur du volume d'eau entrant dans l'appareil (100') et la valeur du volume d'eau, ou d'une boisson, délivrée par l'appareil (100') dans une plage de valeurs programmées dans l'unité de commande (5'),
et **en ce que** l'arrêt de l'alimentation en eau de l'appareil (100, 100') est sous réserve d'obtenir que:
- la valeur du volume d'eau entrant ou traversant l'appareil (100) dépasse une première valeur limite programmée dans l'unité de commande (5), ou que
- la différence entre la valeur du volume d'eau entrant dans l'appareil (100') et la valeur du volume d'eau, ou d'une boisson, délivrée par l'appareil (100') est en dehors d'une plage de valeurs programmées dans l'unité commande (5').

11. Dispositif (1, 1') selon la revendication 10, dans lequel les moyens de détection (8, 8') comprennent:
- au moins un second capteur (9) configuré pour mesurer la valeur du volume d'eau entrant ou traversant l'appareil (100), ou
- au moins un second capteur (9'a) configuré pour mesurer la valeur du volume d'eau entrant dans l'appareil (100') et au moins un troisième capteur (9'b) configuré pour mesurer la valeur du volume d'eau, ou d'une boisson, délivrée par l'appareil (100').

12. Dispositif (1') selon la revendication 10 ou la revendication 11, comprenant:
- des premiers moyens de connexion de dérivation (20') configurés pour relier une ligne d'alimentation (2') alimentant en eau l'appareil (100') à une ligne de distribution (3') délivrant de l'eau de l'appareil (100'),
- des premiers moyens (22') commandés par l'unité de commande (5') et configurés pour permettre le passage de l'eau dans lesdits premiers moyens de connexion de dérivation (20'),
dans lequel le passage de l'eau dans les premiers moyens de connexion de dérivation (20') est sous réserve qu'une différence entre la valeur du volume d'eau entrant dans l'appareil (100') et la valeur du volume d'eau, ou d'une boisson, délivrée par l'appareil (100') soit détectée en dehors d'une plage de valeurs programmées dans l'unité de commande (5').

13. Dispositif (1') selon la revendication 12, dans lequel les premiers moyens (22') configurés pour permettre le passage de l'eau comprennent au moins une seconde électrovanne (23') qui intercepte les moyens de connexion de dérivation (20').

14. Dispositif (1') selon l'une quelconque des revendications précédentes 10-13, comprenant:
- des seconds moyens de connexion de dérivation (27') configurés pour relier une ligne d'alimentation (2') alimentant en eau l'appareil (100') à une branche (29') d'une ligne de distribution (3') délivrant de l'eau de l'appareil (100'),
- des seconds moyens (28') commandés par l'unité de commande (5') et configurés pour permettre le passage de l'eau dans lesdits seconds moyens de connexion de dérivation (27'),
dans lequel le passage de l'eau dans les seconds moyens de connexion de dérivation (27') correspond au mélange de l'eau provenant de la ligne d'alimentation (2') d'eau avec l'eau délivrée en correspondance de la branche (29') de la ligne de distribution (3').

15. Appareil (100, 100') **caractérisé en ce qu'**il comprend un dispositif anti-inondation (1, 1') selon l'une quelconque des revendications précédentes 10-14.
